(19) Europäisches Patentamt
European Patent Office
Office européen des brevets

(11) **EP 3 961 089 A1**

(12) **EUROPEAN PATENT APPLICATION**

(43) Date of publication:
**02.03.2022  Bulletin 2022/09**

(21) Application number: **20382766.2**

(22) Date of filing: **28.08.2020**

(51) International Patent Classification (IPC):
*F21V 5/04* (2006.01)      *G02B 3/06* (2006.01)
*F21V 7/00* (2006.01)      *G02B 3/08* (2006.01)
*G02B 19/00* (2006.01)      *G02B 27/09* (2006.01)
*G02B 17/00* (2006.01)      *G02B 27/00* (2006.01)

(52) Cooperative Patent Classification (CPC):
**G02B 19/0028; F21V 5/04; F21V 7/0091;
G02B 3/06; G02B 3/08; G02B 17/006;
G02B 19/0061; G02B 27/0012; G02B 27/0911;
G02B 27/0916; G02B 27/0927; G02B 27/0955;
G02B 27/0983**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Simulacions Optiques S.L.**
  **08221 Terrassa (Barcelona) (ES)**
• **Universitat Politècnica De Catalunya**
  **08034 Barcelona (ES)**

(72) Inventors:
• **Pizarro Bondia, Carles**
  **08022 Terrassa (ES)**
• **Blanco Nieto, Patricia**
  **08221 Terrassa (ES)**
• **Domínguez Álvarez, Noemí**
  **08221 Terrassa (ES)**

(74) Representative: **Curell Suñol S.L.P.**
  **Muntaner 240, 4o 2a**
  **08021 Barcelona (ES)**

(54) **BIMATERIAL OPTICAL DEVICE WITH TIR EFFECT**

(57) Optical device comprising a light source (4) emitting a light beam according to a maximum emission direction defining an axis Z, and a bimaterial lens. The bimaterial lens comprises an internal volume (6) with a first material with a first refractive index and an external volume (5) with a second material with a second refractive index, both volumes being separated by an interface surface (1). The first refractive index is higher than the second refractive index. The internal volume (6) is defined by the interface surface (1), a lower surface (2), and an upper surface (3). The interface surface (1) is a surface other than a surface defined by a single equation, does not have symmetry of revolution, and/or the curve obtained from the intersection of the interface surface (1) with a plane containing the maximum emission direction has at least one inflection point.

Fig. 4

EP 3 961 089 A1

**Description**

Field of the Invention

The invention relates to an optical device comprising a light source emitting a light beam, preferably with a Lambertian or quasi-Lambertian emission profile, and a bimaterial lens, where the bimaterial lens comprises an internal volume with a first material with a first refractive index and an external volume with a second material with a second refractive index, where the internal volume and the external volume are separated by an interface surface, where the first refractive index is higher than the second refractive index, where the bimaterial lens is arranged on the light source, where the light source has a maximum emission direction, where the maximum emission direction defines a main axis Z, where the center of the light source is at the origin of axis Z, where the internal volume is defined by the interface surface, a lower surface separating the internal volume from the light source, and an upper surface, and where axis Z goes through the lower surface and the upper surface.

Another object of the invention is a method of generating a bimaterial lens arranged on a light source of an optical device according to the invention, and a method of manufacturing said lens and/or said optical device.

The invention is encompassed in the field of optics manufactured with a polymer material for use in illumination and energy transfer systems. The proposed lens produces a specific light distribution and is based on the use of two polymer materials with refractive indices different from one another, which allows suitable geometries to be introduced in order to achieve the total internal reflection (TIR) effect. The lens of the present invention is made up of an external volume and an internal volume, the interface of which is defined by an interface surface preferably described by means of NURBS (Non Uniform Rational B-Splines) formalism.

State of the Art

Illumination is in charge of the processes needed to transfer and distribute energy in the visible spectrum and providing it with functionality, being understood as the area of illumination provided, and it has always been an extremely important field for use, for example, in architectural and urban lighting. The rise of light sources based on light-emitting diodes (LEDs), which allow better performances, better energy consumption, and a smaller size, is changing and updating the illumination technologies used, most of which are now based on the use of LEDs.

Normally (and preferably) the light emitted by the LED devices has a Lambertian emission profile, which means that the intensity of the emitted light varies like the cosine of angle $\theta$, between the considered direction and the normal (i.e., perpendicular) direction ($\theta=0$) with respect to the emitting surface:

$$I(\theta) = I(0) \cdot cos\theta$$

To classify emission profiles, it is common to describe the width of the emitted light beam. This is defined as the width at mid-height of the emitted energy distribution, which is 120° for a Lambertian emitter, or what is equivalent to 60 degrees with respect to the axis.

However, the sector of illumination requires different types of functionalities, i.e., different distributions of light emission. These functionalities are achieved by placing a lens in front of the light source which modifies the path of the rays emitted. In most cases present in the state of the art, the objective of the lens is to create a collimated light beam, although there are some examples of optics that generate specific emission patterns as described in patent document ES 2 372 081 A1 (Arasa et al.). In all these cases, the final emission pattern produced by the lens depends on the emission pattern of the light source, with the use of different lenses based on the light source used being necessary.

Although lenses are generally made of glass, in recent years the use of lenses manufactured chiefly with polymer materials has become established for the field of illumination. This is because of their advantageous characteristics with respect to glass, such as cost, weight, and ease in manufacture. These polymer materials can be of various chemical compositions provided that they are compatible with optical requirements which allow for suitable lens functionality. The refractive index of these polymer materials usually ranges between 1.45 and 1.7.

In addition to providing a specific functionality, optical components try to take maximum advantage of the light emitted by the light source. For this purpose, an effect derived from Snell's Law known as total internal reflection (TIR) is generally used.

The use of this TIR effect is widespread, although it is generally used by means of the combination of a lens made of a polymer material and air as the material with a lower refractive index, such as for example in patent documents US 2008285275 (W. Lubertus) or US 20120320602 (S. Riesebosch). Since lenses of this type are in direct contact with free air, their main drawback is the deterioration of the geometry that allows the TIR effect, because since they are not provided with protection, they are prone to being damaged due to causes from the environment, where they can be scratched or deformed, modifying the optical functionality, which jeopardizes performance of the component.

The description of generally used lens geometries is based on the use of known surfaces, basically spherical and quadric surfaces, generated from conic curves, due to manufacturing restrictions. However, new manufacturing methodologies by CNC engraving or injection allow free optics not subject to the use of a specific range of surfaces to be manufactured. The NURBS (Non Uniform Rational B-Splines) formalism is most commonly used to describe these surfaces.

In the present invention, the NURBS formalism is used for two practical reasons. On one hand, the use of NURBS surfaces ensures continuity and smoothness of the surfaces to be generated, allowing an easy transcription to public formats, such as IGES, STP, or SLT, for sending the lens to be manufactured. On the other hand, the NURBS formalism used for the geometry optimization process allows surfaces of this type to be modified locally by means of varying the position of the control points, obtaining free surfaces that provide important advantages with respect to the quadric surfaces commonly used in the design of optical components. Therefore, in it has been observed in the present invention that the use of quadric surfaces limits the behavior of lenses for several reasons: on one hand, since they are generally surfaces with symmetry of revolution, they do not allow the design to be adapted to the characteristics of the light source. For example, if the emitting light source is square, the behavior in the different emission sectors will be different and not correspond to optimal behavior. Furthermore, since they have a specific conicity for the entire surface, it is not possible to adapt the geometry of the surface to all the light source emission angles, where behavior may only be optimized in a specific emission range. These limitations can be overcome with the use of optics described by NURBS.

Disclosure of the Invention

The object of the invention is an optical device of the type indicated above, characterized in that the interface surface is a surface other than a surface defined by a single equation, and preferably the interface surface is one other than a quadric surface.

Another object of the invention is an optical device of the type indicated above, characterized in that the interface surface is a surface without symmetry of revolution.

Also another object of the invention is an optical device of the type indicated above, characterized in that the curve obtained from the intersection of the interface surface with a plane containing the maximum emission direction has at least one inflection point.

In general, the light source is not a point light source, but rather extends along a surface with non-zero dimensions. It is usually a circular or square surface, although the invention is not limited to light sources with these two geometries, but rather it can be applied to light sources of any geometry (rectangular, oval, etc., or even completely irregular). In the case of circular light sources, the solutions proposed by means of the present invention have symmetry of revolution with respect to the main axis (the maximum emission direction of the light source), so sections of the interface surface of the lens perpendicular to the main axis are circles. As will be seen below, for the description of the present invention the terminology (and the nomenclature in the corresponding formulas) that assumes the case of a circular light source with a specific diameter and an interface surface with symmetry of revolution, for example, assuming that the interface surface has a smaller diameter, a larger diameter, etc., has primarily been used. In the case of non-circular light sources, this is no longer strictly true, because the light source is not circular (and, accordingly, does not have a diameter) and the interface surface generally does not have symmetry of revolution. However, the way to calculate the interface surface in the event of the light source not being circular includes performing a plurality intersections of the light source with a plurality of planes comprising the maximum emission direction, a plurality of sections in the light source having a specific length (a size "$S$") being determined. This value of "$S$" is taken as the value of the diameter of the light source for the corresponding intersection and is the value that is applied in the calculations of the interface surface for the intersection in question. Likewise, when indicating that the interface surface has a specific diameter (larger, smaller, etc.) at a specific height and it is an interface surface without symmetry of revolution, it must be understood that this diameter actually refers to the distance between the two corresponding points on the intersecting plane in question. For this same reason, when indicating in the present description and claims that "the curve obtained from the intersection of the interface surface with a plane containing the maximum emission direction has at least one inflection point", it should be understood that this requirement is met for at least one of the intersecting planes, where it is preferably met for all intersecting planes.

Preferably, the optical device according to the invention combines two of the mentioned characteristics, i.e.:

- the interface surface is a surface other than a surface defined by a single equation and the interface surface is a surface without symmetry of revolution,

- the interface surface is a surface without symmetry of revolution and the curve obtained from the intersection of the interface surface with a plane containing the maximum emission direction has at least one inflection point, or

- the interface surface is a surface other than a surface defined by a single equation and the curve obtained from the intersection of the interface surface with a plane containing the maximum emission direction has at least one inflection point,

and very preferably the optical device according to the invention combines the three mentioned characteristics, i.e., the interface surface is a surface other than a surface defined by a single equation, the interface surface is a surface without symmetry of revolution, and the curve obtained from the intersection of the interface surface with a plane containing the maximum emission direction has at least one inflection point.

The following preferred alternatives and/or optional improvements are common to any of the three previously mentioned alternatives, as well as to any of the previously indicated combinations:

- The interface surface is a NURBS surface.

- The light source is a LED.

- The difference between the first refractive index and the second refractive index is greater than or equal to 0.04 and is preferably greater than or equal to 0.09.

- The light source has a value of S comprised between 100 micra and 1 cm, and preferably comprised between 0.1 mm and 5 mm. That is, in the case of circular light sources the value of S is the value of the diameter of the light source, and in the case of non-circular light sources, the value of S of the intersection with any of the intersecting planes is within the indicated ranges.

- The height h of the lens (measured in the sense of the maximum emission direction) is comprised between 3*S and 15*S, and preferably between 5*S and 10*S. Like in the case above (and in later cases), if the light source is circular, S is the diameter of the light source, whereas in the case of non-circular light sources, S will have a specific value for each intersecting plane, and accordingly the range may be different between one intersecting plane and another.

- The diameter of the upper surface of the internal lens is between 0.5*h and 2*h. In line with what has previously been disclosed, in the case of non-circular light sources, the upper surface probably does not have a larger diameter strictly speaking, because it probably does not have symmetry of revolution. In these cases, it must be understood that the expression "diameter of the upper surface" refers to the distance between the upper ends of the intersection of the internal lens with any of the intersecting planes.

Another object of the invention is a method of generating a lens arranged on a light source of an optical device, where the lens comprises an internal volume with a first material with a first refractive index and an external volume with a second material with a second refractive index, where the internal volume and the external volume are separated by an interface surface, where the first refractive index is higher than the second refractive index, where the light source preferably emits a light beam with a Lambertian or quasi-Lambertian emission profile, where the light source has a maximum emission direction defining an axis Z, where the center of the light source is at the origin of axis Z, where the internal volume is defined by the interface surface, a lower surface separating the internal volume from the light source, and an upper surface, where axis Z goes through the lower surface and the upper surface, characterized in that it comprises the generation of the interface surface, where: [a] the interface surface is a surface other than a surface defined by a single equation, and/or [b] the lens is a lens without symmetry of revolution, and/or [c] the curve obtained from the intersection of the interface surface with a plane containing the maximum emission direction has at least one inflection point.

A series of preferred features of the method according to the invention are indicated below:

- The generation of the interface surface comprises a step of optimizing a merit function comprising at least one optical characteristic of the lens. To that end, the merit function preferably compares a distribution of illumination obtained on a pre-established frame of reference with a target distribution of illumination on the frame of reference. Preferably, the merit function maximizes the energy received in the frame of reference and/or minimizes the root-mean-square deviation of the distribution of illumination obtained in the frame of reference with respect to the target distribution of illumination in the frame of reference, it being particularly advantageous that both optimizations can be performed at the same time. Alternatively, the merit function can maximize energy efficiency by maximizing the ratio between the luminous flux exiting along the upper perimeter of the interface surface and the luminous flux entering along the lower perimeter of the interface surface. Another preferred alternative is where the merit function maximizes the functionality of the lens by minimizing the difference between the actual output angle of the rays of light of the lens and the target output angle. These last two alternatives are advantageously combined, and preferably the merit function first maximizes energy efficiency of the lens, and once an interface surface meeting the energy efficiency objective has been obtained, the merit function maximizes the functionality of the lens by taking the interface surface meeting the energy efficiency objective as a starting point. To that end, preferably the merit function first determines the lower surface, calculating it such that it maximizes lens functionality, and then determines the interface surface, calculating it such that it maximizes lens energy efficiency.

- In the event of the light source being circular, it comprises calculating an inner quadric surface and an outer quadric surface between which the interface surface must extend. Preferably, this step comprises calculating Ra, Va, Rb, Rc, Kc, Vc, and Kd by means of the following formulas:

$$R_a = \frac{1}{2}\left( (h + V_a)(1 + k_a) - \frac{\left(\frac{\phi_U}{2}\right)^2}{(h + V_a)} \right)$$

$$V_a = A \cdot k_a$$

$$R_b = \frac{1}{2}\left( (h + V_b)(1 + k_b) - \frac{\left(\frac{\phi_U}{2}\right)^2}{(h + V_b)} \right)$$

$$R_c = -B \cdot \phi_U$$

$$K_c = \frac{R_c}{V_c} + \frac{1}{(2V_c)^2}\left(\frac{\phi_B}{2}\right)^2 - 1$$

$$V_c = \frac{-R_c}{C}$$

$$K_d = \frac{R_d}{V_d} + \frac{1}{(2V_d)^2}\left(\frac{\phi_B}{2}\right)^2 - 1$$

where $k_a$ and $k_b$ have values preferably comprised between -0.5 and -3, $A$ has a value preferably comprised between 1 and 3, $V_b$ has a value preferably comprised between $V_a$ and 2 times $V_a$, $B$ has a value preferably comprised between 1 and 3, $C$ has a value preferably comprised between 0.5 and 4, $R_d$ has a value preferably comprised between 0.5 and 1.5 times $R_c$, and $V_d$ has a value preferably comprised between 1 and 2 times $V_c$.

- In the event of the light source not being circular, a plurality of intersections of the light source with a plurality of planes comprising the maximum emission direction are performed, a plurality of cut-off points being determined, and an inner quadric surface and an outer quadric surface between which the interface surface must extend as if said light source was a circular light source are calculated for each meridian of the interface surface passing through each of the cut-off points, such that each meridian of the interface surface must extend between the corresponding meridian of the inner quadric surface and the corresponding meridian of the outer quadric surface, and there are generated an outer NURBS surface from the meridians of the outer quadric surfaces and an inner NURBS surface from the meridians of the inner quadric surfaces.

Another object of the invention is a method of manufacturing an optical device comprising a light source emitting a light beam, preferably with a Lambertian or quasi-Lambertian emission profile, and a bimaterial lens arranged on the light source, where the light source has a maximum emission direction, characterized in that it comprises a step of generating the lens according to the invention and a step of manufacturing the lens. Preferably, the step of manufacturing includes a step of injecting in an injection mold comprising an interface surface according to the invention (i.e., where: [a] the interface surface is a surface other than a surface defined by a single equation, and/or [b] the lens is a lens without symmetry of revolution, and/or [c] the curve obtained from the intersection of the interface surface with a plane containing the maximum emission direction has at least one inflection point).

Another object of the invention is a method of manufacturing an injection mold comprising an interface surface according to the invention (i.e., where: [a] the interface surface is a surface other than a surface defined by a single equation, and/or [b] the lens is a lens without symmetry of revolution, and/or [c] the curve obtained from the intersection of the interface surface with a plane containing the maximum emission direction has at least one inflection point).

Brief Description of the Drawings

Other advantages and features of the invention are apparent from the following description in which preferred embodiments of the invention are described in a nonlimiting manner in reference to the attached drawings, in which:

Figure 1 shows a view of a section containing the axis of revolution of the lens of the present invention.

Figure 2 shows an example of a conic curve.

Figures 3 (a) and (b) show diagrams of the general dimensions of a lens.

Figures 4 and 5 show diagrams of the conic curves which, by means of revolution, generate the quadric surfaces that limit the geometry of the lens of the present invention. The boundaries of the interface surface are determined by surfaces (a) and (b), the boundaries of the lower surface are determined by surfaces (c) and (d), and the boundaries of the upper surface are determined by surfaces (e) and (f).

Figures 6 (a) and 6 (b) shows an example of a distribution of illumination in the detector (Figure 6 (a)), as well as the average value of the flux on axis *x* (Figure 6(b).

Figure 7 is a diagram showing the distance between the detector and the frame of reference.

Figure 8 shows a reference target function of Example 1.

Figures 9 (a) and 9 (b) show evolution of the quality function in Example 1.

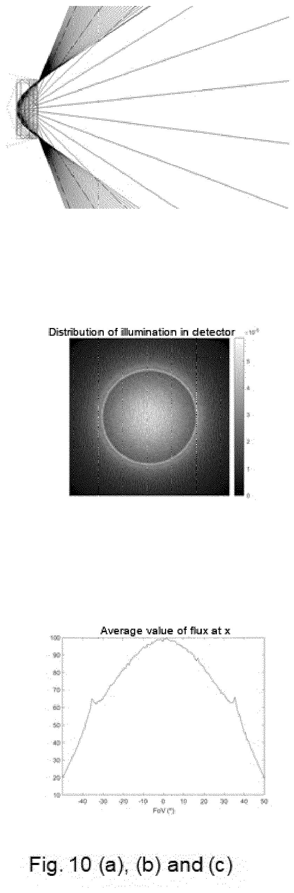

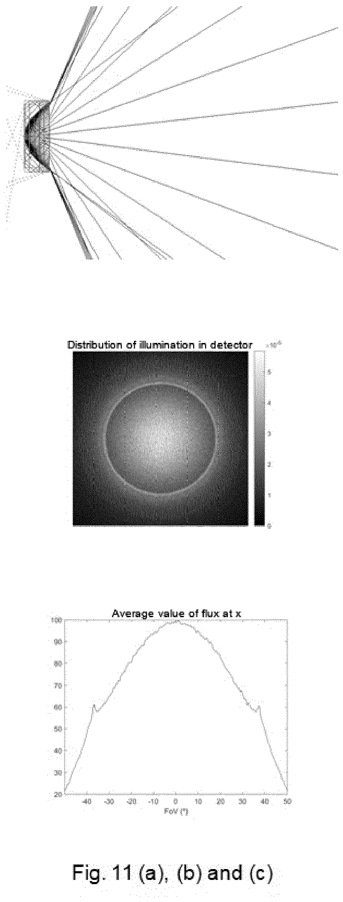

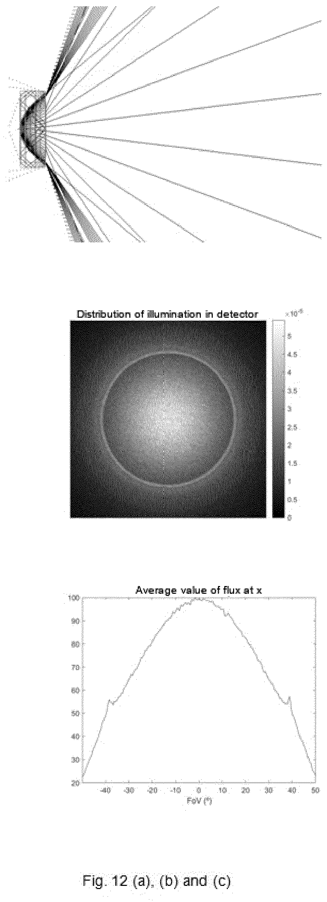

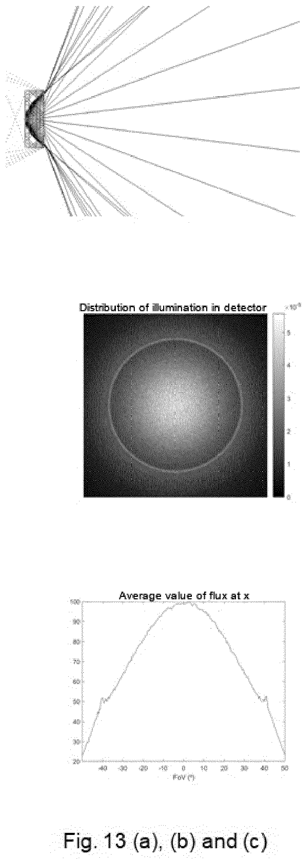

Figures 10 (a), (b), (c), 11 (a), (b), (c), 12 (a), (b), (c), and 13 (a), (b), (c) show four optimal solutions of Example 1.

Figure 14 shows a reference target function of Example 2.

Figures 15 (a) and 15 (b) show the evolution of the quality function in Example 2.

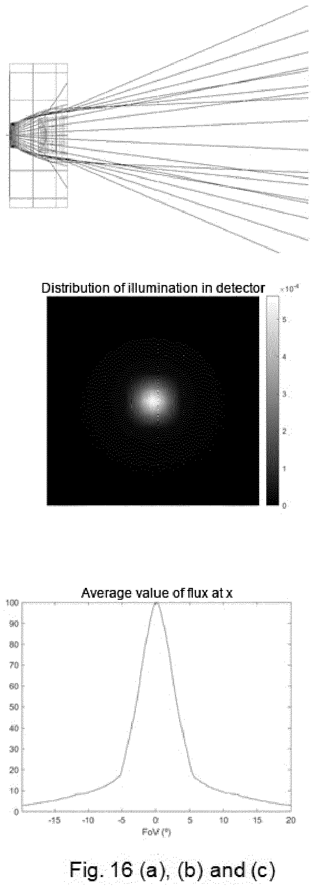

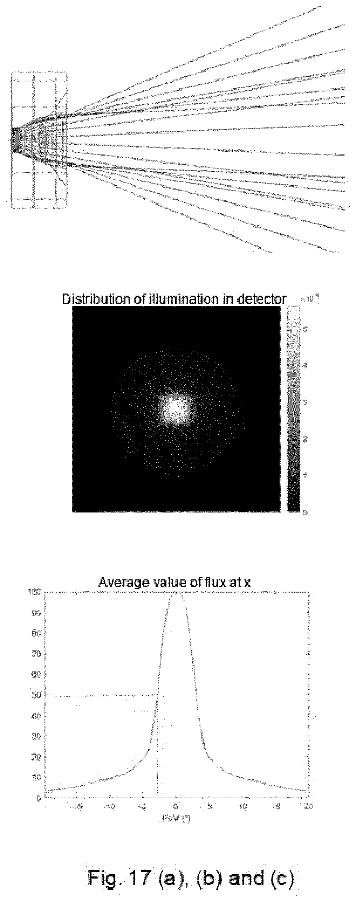

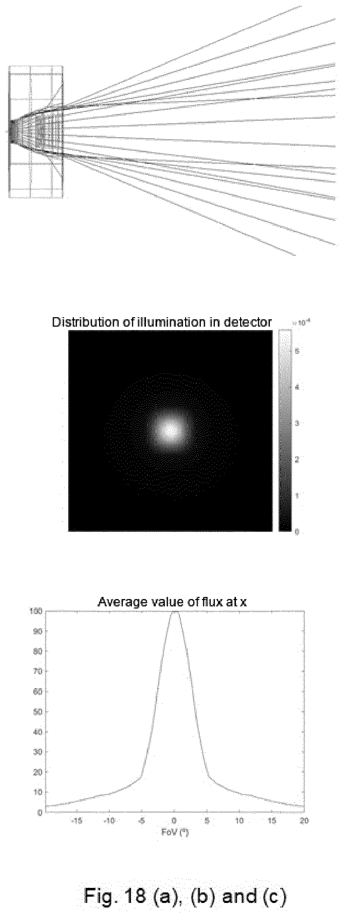

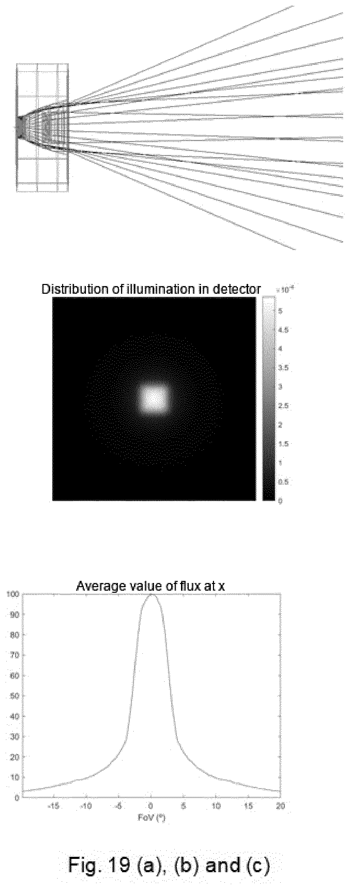

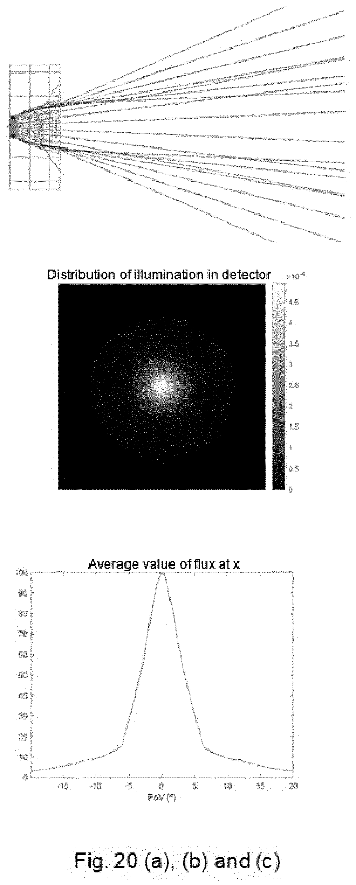

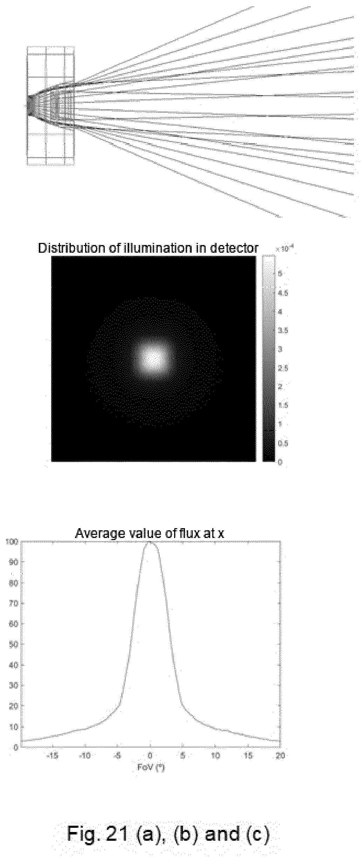

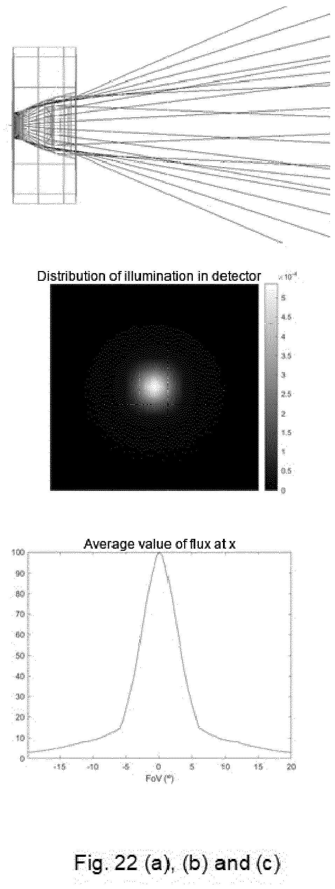

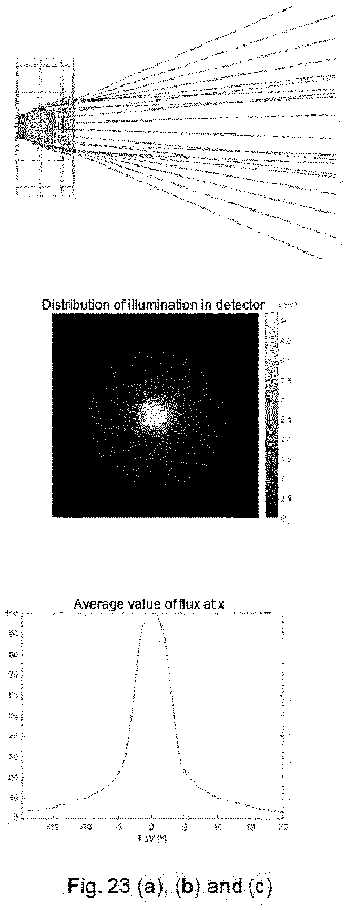

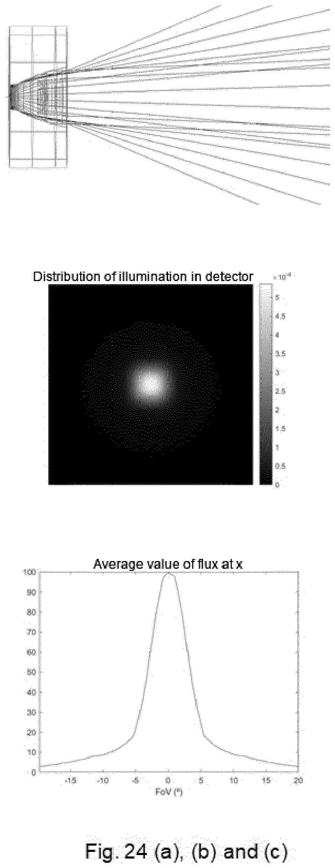

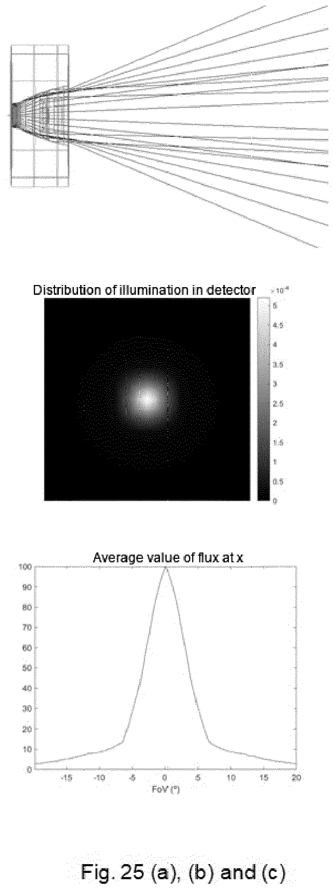

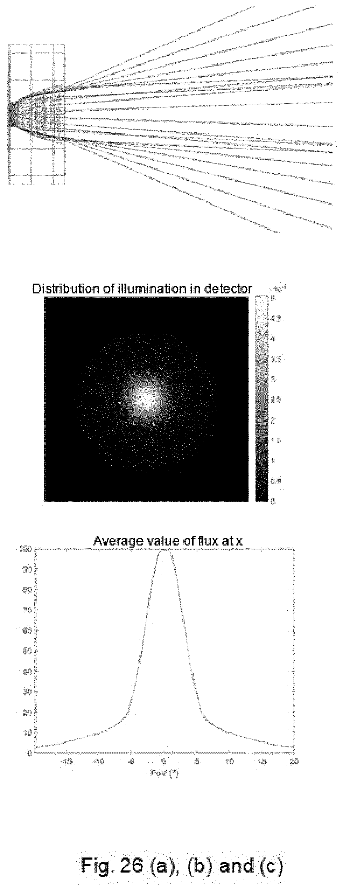

Figures 16 (a), (b), (c), 17 (a), (b), (c), 18 (a), (b), (c), 19 (a), (b), (c), 20 (a), (b), (c), 21 (a), (b), (c), 22 (a), (b), (c), 23 (a), (b), (c), 24 (a), (b), (c), 25 (a), (b), (c), and 26 (a), (b), (c) show eleven optimal solutions of Example 2.

Detailed Description of the Embodiments of the Invention

In the present invention the illumination profile is achieved due to the incorporation of a lens with two different types of polymer material which allow the TIR (total internal reflection) effect and with physical characteristics that favor the use of these devices in illumination systems.

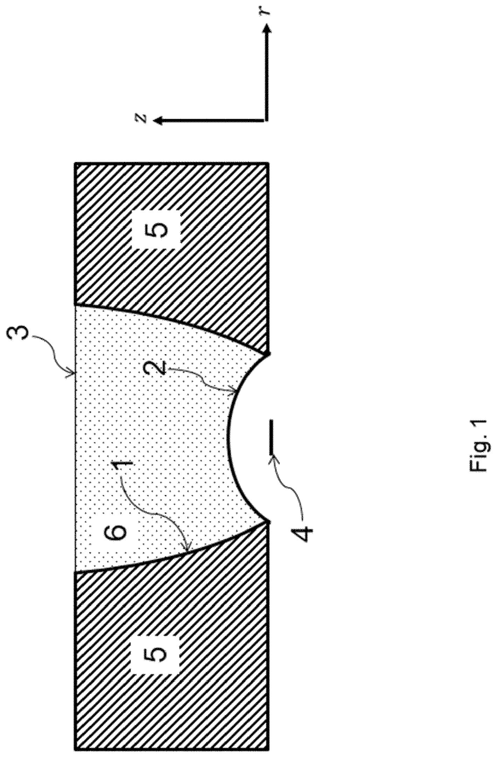

The general structure of the lens can be observed through the image of a section (see Figure 1) containing the main axis, i.e., the maximum emission direction, which coincides with the vertical axis and corresponds to the variable z, where the emitting light source 4 located at the origin of the vertical axis Z, the external volume 5 of the lens formed by a polymer material with a specific refractive index, and the internal volume 6 formed by another different polymer material with a refractive index that is higher than that of the external material can be seen. The internal volume 6 is demarcated by an interface surface 1, separating it from the external volume 5, a lower surface 2 facing the light source 4 and through which light from of the light source 4 enters, and an upper surface 3 opposite the lower surface 2. The second external material has a dual functionality. On one hand, it contributes to generating the TIR effect due to the change in refractive index. In this case, although the difference in refractive index of the materials is less than if air were used, the resulting geometry is more robust to manufacturing errors than geometries considering air as the second material. On the other hand, the second material has the additional function of protecting the internal optic from the environment, preventing it from being subjected to deterioration, scratches, or malformations, and helping to correctly center the internal lens on the light source.

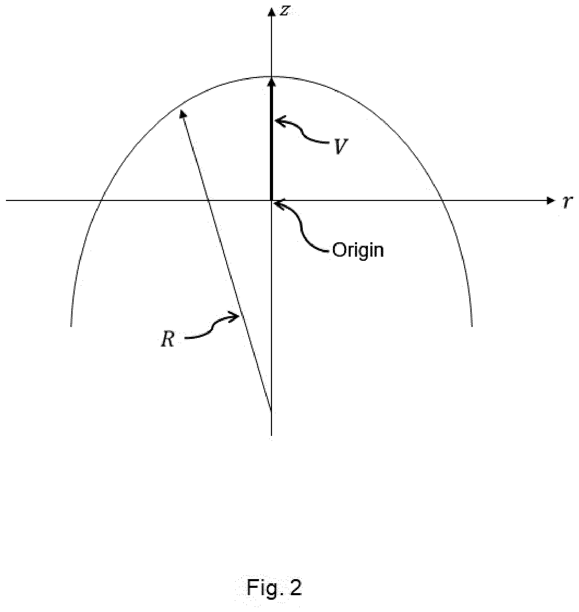

In general, a conic curve formed by a lens (see Figure 2) can be expressed by means of the equation of a conic section referenced at the origin, where the light source is located, where $z$ is the direction of the axis optical, and $z(r)$ is the depth, i.e., the component $z$ of the displacement of the surface from the vertex, at distance $r$ from the axis:

$$z(r) = \frac{r^2}{R + \sqrt{R^2 - r^2(1 + k)}} + V$$

where $R$ is the radius, $k$ is the conicity of the curve, $V$ is the distance from the vertex to the origin of the surface, and they are expressed as:

$$k = \frac{2R}{V-z} + \frac{1}{(z-V)^2}r^2 - 1 \qquad R = \frac{1}{2}\left(\frac{1}{z-V}r^2 - (z-V)\cdot(1+k)\right)$$

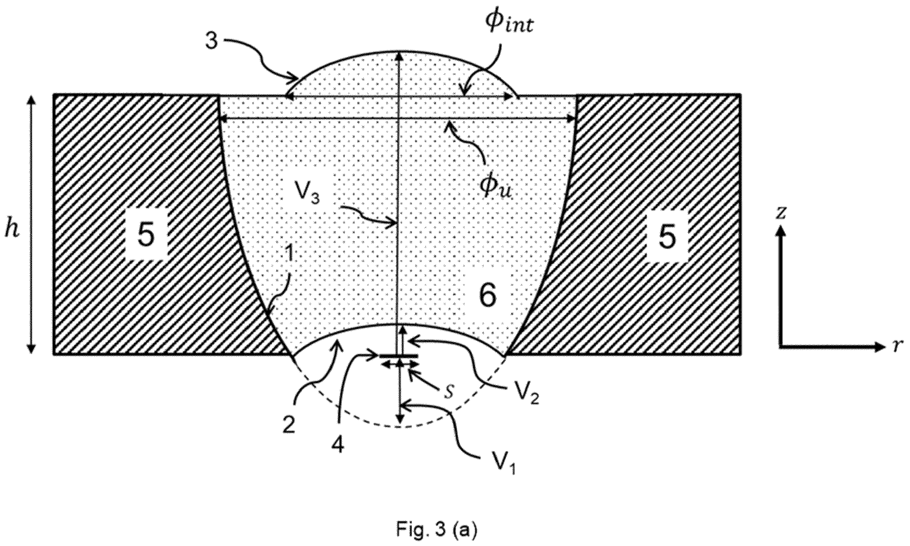

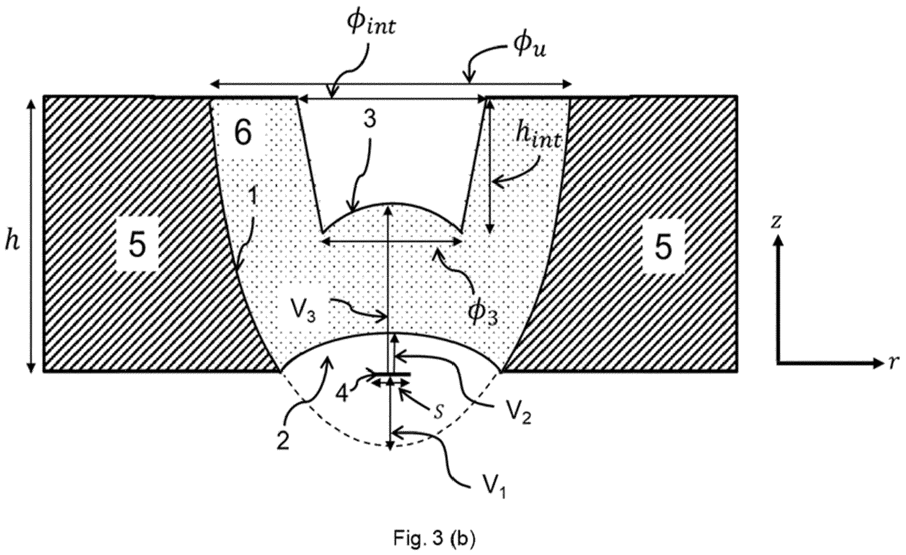

The dimensions of the lens are closely related to various parameters, among which is the distance to the vertex $V$, as can be observed in Figures 3 (a) and 3 (b).

The height *"h"* of the lens is linked with the size of the light source *"S"*, such that the height is preferably comprised between 3 and 15 times size "$S$" of the light source, very preferably between 5 and 10 times. Furthermore, this height *"h"* is also linked with the upper aperture of the lens *"$\phi_U$"*, which coincides with the larger diameter of the internal volume 6, where *"$\phi_U$"* is preferably comprised between 0.5 and 2 times the height *"h"*.

The lower surface 2 is preferably a quadratic surface defined from a conic curve, as shown in Figures 3 (a) and 3 (b). In turn, the upper surface 3 can be planar, but it may also be quadric or include a quadric surface, as shown in Figures 3 (a) and 3 (b).

The surfaces 1, 2, and 3 (specifically the conical part of the surface 3) have distances from the origin to the respective vertexes $V_1$, $V_2$, and $V_3$ which limit the size $\phi_{int}$ and $\phi_3$ of the upper surface 3, such that if $V_3 > h$, the upper surface 3 will be a quadric surface intersecting the plane defined by the height $h$ of the lens, of diameter $\phi_{int}$. In contrast, if $V_3 < h$, the base of the lens defined by the surface 3, "$\phi_3$" will be located at a distance $h_{int}$ with respect to the plane defined by the height $h$, always less than $\phi_{int}$ and will be limited by the surface of union between $\phi_3$ and $\phi_{int}$.

In a general case, the light source, located at the origin of the system, will be immersed in air, but the invention also considers the possibility of the source being immersed in the first material of the internal volume 6.

In most cases referred to in this invention, the light source corresponds with a light-emitting diode (LED), although the invention is not limited to sources of this type. In general, the light source is considered to be planar and has a size determined by "$S$" preferably ranging between 100 micra and 1 centimeter, and very preferably between 0.1 and 5.0 millimeters.

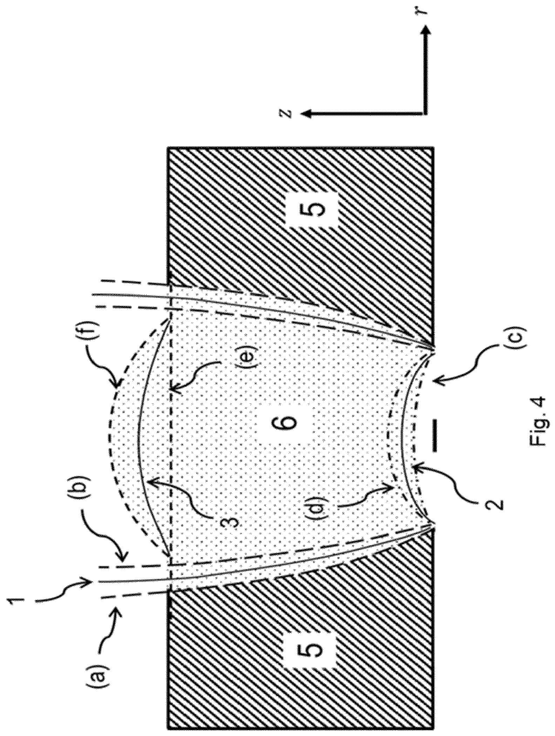

The geometry of the lens object of this invention is obtained as a result of the two optical effects generated by surfaces 1 and 2, the refraction of the light for an area of the rays emitted by the lens, and the total internal reflection effect for the rest of the rays emitted at larger angles on the surface 2. For the purpose of delimiting the location in space that must demarcate the lens object of the present invention, a set of (preferably four) quadric surfaces are used which are analytically obtained from the general parameters of the lens which, grouped two-by-two, fix a portion of space in which the optimal surfaces for obtaining the desired distribution of illumination will be determined, as shown in Figure 4. In the lateral area of the lens, the interface surface 1 will be located between curves (a) and (b), in the lower area, the lower surface 2 will be located between surfaces (c) and (d), whereas the upper surface 3 will be located between curves (e) and (f), where the parameter $V_3$ plays a very important role in the definition of this surface.

The expressions that will determine the points where surfaces 1 and 2 will be located in space, defined by the general parameters of the lens and of the initial conic curves, are described in detail below.

Lateral area | Lower area

$$R_a = \frac{1}{2}\left((h + V_a)(1 + k_a) - \frac{\left(\frac{\phi_U}{2}\right)^2}{(h + V_a)}\right)$$

$$R_c = \text{-}B \cdot \phi_U \qquad V_c = \frac{-R_c}{C}$$

$$k_a$$

$$K_c = \frac{R_c}{V_c} + \frac{1}{(2V_c)^2}\left(\frac{\phi_B}{2}\right)^2 - 1$$

$$V_a = A \cdot k_a$$

$$R_b = \frac{1}{2}\left((h + V_b)(1 + k_b) - \frac{\left(\frac{\phi_U}{2}\right)^2}{(h + V_b)}\right)$$

$$R_d$$

$$k_b$$

$$K_d = \frac{R_d}{V_d} + \frac{1}{(2V_d)^2}\left(\frac{\phi_B}{2}\right)^2 - 1$$

$$V_b$$

$$V_d$$

where $k_a$ and $k_b$ have values preferably between -0.5 and -3. $A$ has a value preferably between 1 and 3, and $V_b$ has a value preferably between $V_a$ and 2 times $V_a$. $B$ has a value preferably between 1 and 3, $C$ has a value preferably between 0.5 and 4, $R_d$ has a value preferably between 0.5 and 1.5 times $R_c$, and $V_d$ has a value preferably between 1 and 2 times $V_c$.

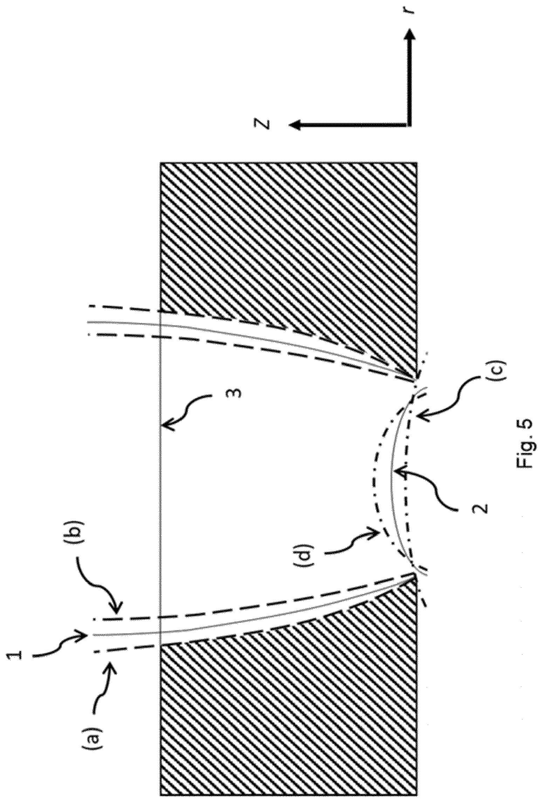

The design process is carried out from an initial configuration, as shown in Figure 5, which, by means of optimization, achieves apertures of $\pm 2.5°$ and $\pm 36°$. Therefore, the initial configuration for the optimization process will be formed by conic curves (a), (b) for surface 1, (c), (d) for surface 2, and a conic section of curvature 0 (infinite radius) for surface 3, and they will be the starting populations for initiating the optimization process based on the Simplex method, which in this case in particular is defined in Numerical Recipes (http://numerical.recipes/webnotes/nr3web12.pdf).

The optimization process is based on two quality and evaluation criteria, based on the calculation of the standard deviation of the amount of light reflected by the TIR effect and the divergence of the emergent light from the obtained distribution of illumination and the target distribution established at the beginning of the process.

The final result will give rise to a lens formed by the interface surface 1, which will be described by an intermediate NURB located between curves (a) and (b), the lower surface 2 which will be described by an intermediate NURBS defined between curves (c) and (d), and the upper surface 3 defined by an intermediate conic section defined between curves (e) and (f).

As a starting point for the initial configuration optimization process to achieve target apertures $\pm 2.5°$ and $\pm 36°$, the equations of the conic sections defining the interface surface 1 and the lower surface 2 will be re-expressed in NURBS formalism, whereas the upper surface 3 will continue to be defined by a conic curve which will initially be a conic section of curvature 0 (infinite radius, in other words a plane), and during the optimization process it may or may not be a non-planar surface, where the optimization variables will be $V_3, h_{int}, \phi_3$, and $R_3$.

In general, but without limiting other forms of the invention, the conditions for optimizing this process comprise the use of a ray tracing program that simulates the behavior of the real light source, preferably considering a Lambertian light emission lobe, with a number of simulated rays preferably not less than $10^6$ rays, performing precise ray tracing and without including light polarization effects. Without limiting the behavior and the results of this method, the optimization process used is a method for locally modifying surfaces under a merit function and specific restrictions which can be performed with different numerical optimization software. The restrictions which allow ensuring the manufacturability of the designed component are considered to be among the process restrictions.

Conic curves (a), (b), (c), (d), and (e) of surfaces 1, 2, and 3, which form the initial population for the optimization process and the corresponding control points defining the NURBS for these same surfaces, are described in detail below.

| Conic section | Curvature (C=1/R) | Conicity (k) | Distance to the vertex (V) |
|---|---|---|---|
| (a) | 1/6.680 | -1 | 0.150 |
| (b) | 1/2.460 | -0.980 | 0.720 |

(continued)

| Conic section | Curvature (C=1/R) | Conicity (k) | Distance to the vertex (V) |
|---|---|---|---|
| (c) | 1/4.740 | -0.960 | 1.500 |
| (d) | 1/4.800 | -0.930 | 1.220 |
| (e) | 0 | 1 | 16.000 |

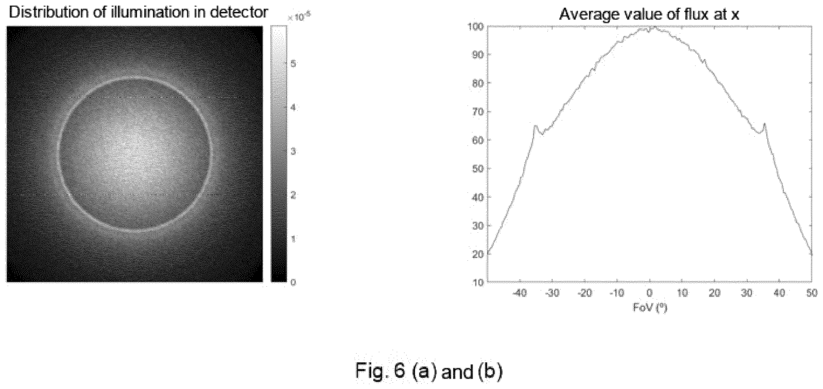

Each of the obtained configurations will visually result in the distribution of illumination in the detector, as well as the average value of the flux both on axis $x$ and on axis y, to which the merit function developed for evaluating the result will be applied (see Figures 6 (a) and (b)).

The optimization process is based on a merit function consisting of two quality and evaluation criteria, based on the calculation of the standard deviation of the amount of light reflected by the TIR effect and the divergence of the emergent light from the obtained distribution of illumination and the target distribution established at the beginning of the process.

The target function $F_{tar_i}$ is defined by the target distribution of illumination, which defines a field of vision (*FoV*) and is mathematically expressed as:

$$F_{tar_i} = 100 \cdot e^{-(FoV_i)^2 / 2\sigma^2}$$

where the parameter $\sigma$ of $F_{tar_i}$ is calculated for the corresponding values of $F_{tar}$ and *FoV* based on the target distribution.

The first parameter chosen to evaluate the quality function (FQ) is the Framed Energy (FE), which is defined as the energy obtained in a frame of reference, with a specific number of pixels $n_x$, $n_y$ in directions $x$ and $y$, respectively, of size $L_x \times L_y$ defined as:

$$L_x = size_{pixel_x} \cdot n_x ; \qquad L_y = size_{pixel_y} \cdot n_y$$

Therefore, the Framed Energy is defined as:

$$FE = \sum_{i=1}^{n_x} \sum_{j=1}^{n_y} F_{ij}$$

where $F_{ij}$ is the value of the flux in pixel $i,j$ of the matrix of the detector.

The next parameter chosen to enable defining the quality function is the root-mean-square deviation (*dev2*) in directions $x$ and $y$ of the frame, with respect to the target curve.

$$dev2 = \frac{1}{2} \cdot \left( \frac{\sum_{i=1}^{n_x} dev2x_i}{n_x} + \frac{\sum_{i=1}^{n_y} dev2y_i}{n_y} \right)$$

$$dev2x_i = \frac{(Fx_i - F_{ref}x_i)^2}{F_{tar}x_i^2} \cdot 100$$

$$Fx_i = \frac{\sum_{j=1}^{n_y} F_{ij}}{n_y} \cdot \frac{100}{max\left(\frac{\sum_{j=1}^{n_y} F_{ij}}{n_y}\right)} = \frac{\sum_{j=1}^{n_y} F_{ij}}{max\left(\sum_{j=1}^{n_y} F_{ij}\right)} \cdot 100$$

$$dev2y_i = \frac{(Fy_i - F_{ref}y_i)^2}{F_{tar}y_i{}^2} \cdot 100$$

$$Fy_j = \frac{\sum_{i=1}^{n_x} F_{ij}}{n_x} \cdot \frac{100}{max\left(\frac{\sum_{i=1}^{n_x} F_{ij}}{n_x}\right)} = \frac{\sum_{i=1}^{n_x} F_{ij}}{max\left(\sum_{i=1}^{n_x} F_{ij}\right)} \cdot 100$$

Each pixel $i,j$ corresponds with angles $FoVx_i$ and $FoVy_j$ calculated as follows:

$$FoVx_i = \text{atan}\left(\frac{dist\_x\_pixel\_ij}{dist\_z\_detector}\right)$$

$$FoVy_i = \text{atan}\left(\frac{dist\_y\_pixel\_ij}{dist\_z\_detector}\right)$$

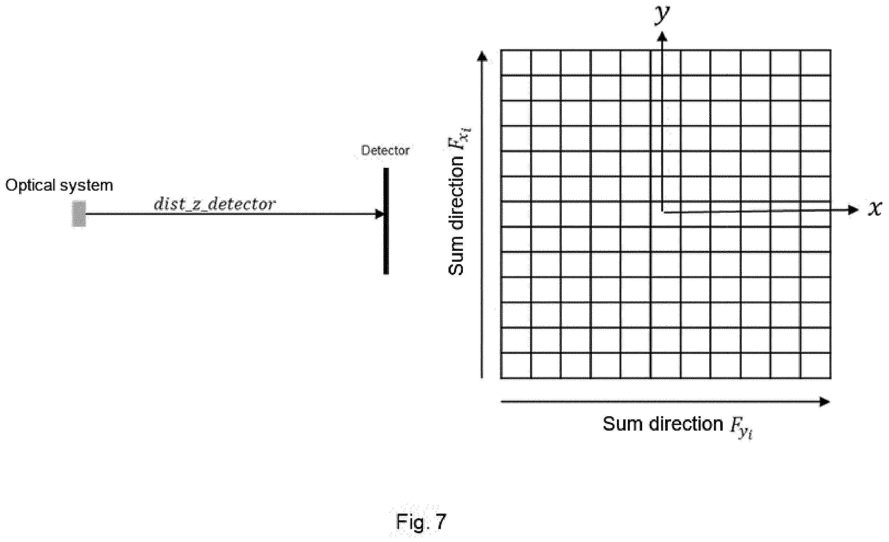

where the distance (0.0) corresponds to the position of the center of the detector (the frame of reference) on plane $xy$ (see Figure 7).

Therefore, the merit function (FM) is defined as:

$$FM = \begin{cases} max(FE) \\ min(dev2) \end{cases}$$

The termination of this method provides an optimized optical component that ensures the minimum angle of divergence possible and is furthermore manufacturable, because restrictions suitable for ensuring the manufacture thereof have been considered during the process.

Examples

Example 1:

The target distribution of light is established at $\pm 36°$. PMMA with a refractive index of 1.49 has been used as the material for the external volume, whereas a PC material with refractive index 1.58 has been used for the internal volume, which allows the TIR effect.

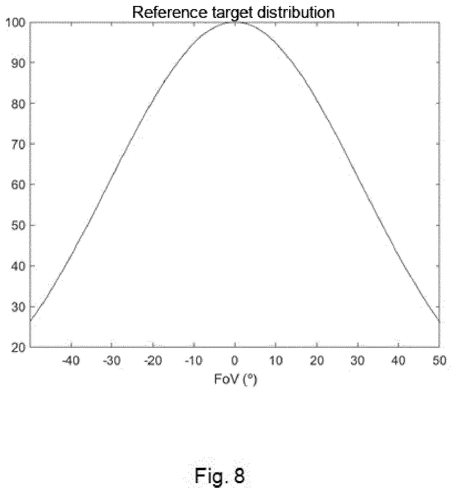

The conic sections (a), (b), (c), (d) defining the initial configuration will be transformed into NURBS formalism and, together with conic section 3, form the initial population for the simplex-based optimization process for the target distribution of $\pm 36°$, the reference target function of which is defined by the values $F_{tar}$ = 50, $FoV$ = 36° and is represented as shown in Figure 8.

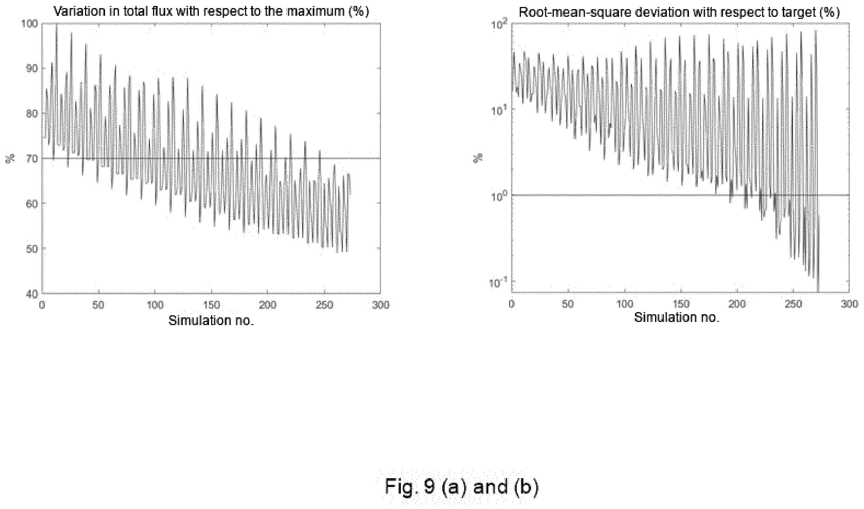

This optimization process gives rise to a large amount of configurations (simulation no.) in which the quality function is evaluated. The quality function is represented based on the two established criteria, the variation in total flux with respect to the maximum and the root-mean-square deviation with respect to the reference (see Figures 9 (a) and (b)).

Based on these values, a preferred selection criterion is established consisting of finding the configurations yielding a value of total flux greater than 70% and the square deviation less than 1%.

In this particular case, four optimal solutions have been obtained for the established target distribution of illumination, as shown below.

| Simulation number | Total flux (W) | Mean deviation (%) | Figures |
|---|---|---|---|
| 181 | 0.76 | 1.03 | 10 (a), (b), and (c) |
| 194 | 0.74 | 0.81 | 11 (a), (b), and (c) |
| 207 | 0.73 | 0.70 | 12 (a), (b), and (c) |

(continued)

| Simulation number | Total flux (W) | Mean deviation (%) | Figures |
|---|---|---|---|
| 220 | 0.71 | 0.65 | 13 (a), (b), and (c) |

Example 2:

The target distribution of light is established at ±2.5°. PMMA with a refractive index of 1.49 has been used as the material for the external volume, whereas a PC material with refractive index 1.58 has been used for the internal volume, which allows the TIR effect.

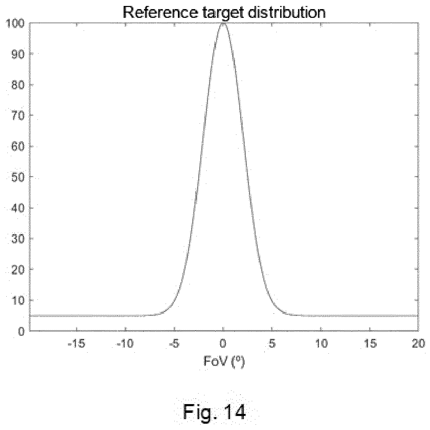

The conic sections (a), (b), (c), (d) defining the initial configuration will be transformed into NURBS formalism and, together with conic section 3, form the initial population for the simplex-based optimization process for the target distribution of ±2.5°, the reference target function of which is defined by the values $F_{tar}$ = 50, $FoV$ = 2.5° and is represented as shown in Figure 14.

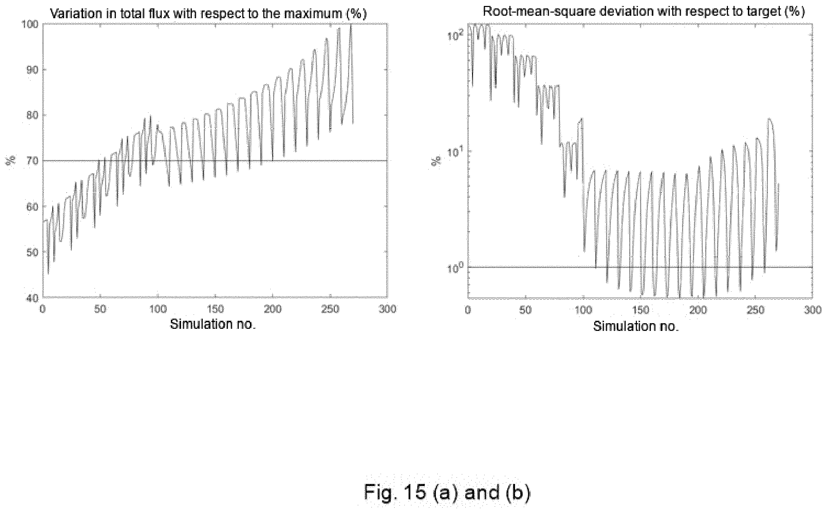

This optimization process gives rise to a large amount of configurations (simulation no.) in which the quality function is evaluated. The quality function is represented based on the two established criteria, the variation in total flux with respect to the maximum and the root-mean-square deviation with respect to the reference (see Figures 15 (a) and (b)).

Based on these values, a selection criterion is established consisting of finding the configurations yielding a value of total flux greater than 70% and the square deviation less than 1%.

In this particular case, eleven optimal solutions have been obtained for the established target distribution of illumination, as shown below.

| Simulation number | Total flux (W) | Mean deviation (%) | Figures |
|---|---|---|---|
| 94 | 0.7 | 0.57 | 16 (a), (b), and (c) |
| 95 | 0.7 | 0.55 | 17 (a), (b), and (c) |
| 105 | 0.71361 | 0.53 | 18 (a), (b), and (c) |
| 106 | 0.71378 | 0.72 | 19 (a), (b), and (c) |
| 115 | 0.72838 | 0.83 | 20 (a), (b), and (c) |
| 116 | 0.72873 | 0.55 | 21 (a), (b), and (c) |
| 126 | 0.74496 | 0.61 | 22 (a), (b), and (c) |
| 127 | 0.74488 | 0.83 | 23 (a), (b), and (c) |
| 137 | 0.76259 | 0.61 | 24 (a), (b), and (c) |
| 147 | 0.78247 | 0.77 | 25 (a), (b), and (c) |
| 158 | 0.80134 | 0.89 | 26 (a), (b), and (c) |

**Claims**

1. An optical device comprising a light source (4) emitting a light beam and a bimaterial lens, where said bimaterial lens comprises an internal volume (6) with a first material with a first refractive index and an external volume (5) with a second material with a second refractive index, where said internal volume (6) and said external volume (5) are separated by an interface surface (1), where said first refractive index is higher than said second refractive index, where said lens is arranged on said light source (4), where said light source (4) has a maximum emission direction defining an axis Z, where the center of said light source (4) is at the origin of said axis Z, where said internal volume (6) is defined by said interface surface (1), a lower surface (2) separating said internal volume (6) from said light source (4), and an upper surface (3), where said axis Z goes through said lower surface (2) and said upper surface (3), **characterized in that** said interface surface (1) is a surface other than a surface defined by a single equation.

2. The device according to claim 1, **characterized in that** said interface surface (1) is one other than a quadric surface.

3. An optical device comprising a light source (4) emitting a light beam and a bimaterial lens, where said bimaterial lens comprises an internal volume (6) with a first material with a first refractive index and an external volume (5) with a second material with a second refractive index, where said internal volume (6) and said external volume (5) are separated by an interface surface (1), where said first refractive index is higher than said second refractive index, where said lens is arranged on said light source (4), where said light source (4) has a maximum emission direction defining an axis Z, where the center of said light source (4) is at the origin of said axis Z, where said internal volume (6) is defined by said interface surface (1), a lower surface (2) separating said internal volume (6) from said light source (4), and an upper surface (3), where said axis Z goes through said lower surface (2) and said upper surface (3), **characterized in that** said interface surface (1) is a surface without symmetry of revolution.

4. An optical device comprising a light source (4) emitting a light beam and a bimaterial lens, where said bimaterial lens comprises an internal volume (6) with a first material with a first refractive index and an external volume (5) with a second material with a second refractive index, where said internal volume (6) and said external volume (5) are separated by an interface surface (1), where said first refractive index is higher than said second refractive index, where said lens is arranged on said light source (4), where said light source (4) has a maximum emission direction defining an axis Z, where the center of said light source (4) is at the origin of said axis Z, where said internal volume (6) is defined by said interface surface (1), a lower surface (2) separating said internal volume (6) from said light source (4), and an upper surface (3), where said axis Z goes through said lower surface (2) and said upper surface (3), **characterized in that** the curve obtained from the intersection of said interface surface (1) with a plane containing said maximum emission direction has at least one inflection point.

5. The device according to any one of claims 1 to 4, **characterized in that** the difference between said first refractive index and said second refractive index is greater than or equal to 0.04 and is preferably greater than or equal to 0.09.

6. The device according to any one of claims 1 to 5, **characterized in that** said light source (4) has a value of S comprised between 100 micra and 1 cm, and preferably comprised between 0.1 mm and 5 mm.

7. The device according to any one of claims 1 to 6, **characterized in that** the height h of the lens is comprised between 3*S and 15*S, and preferably between 5*S and 10*S.

8. The device according to any one of claims 1 to 7, **characterized in that** the diameter of said upper surface (3) is comprised between 0.5*h and 2*h.

9. A method of generating a lens arranged on a light source (4) of an optical device, where said bimaterial lens comprises an internal volume (6) with a first material with a first refractive index and an external volume (5) with a second material with a second refractive index, where said internal volume (6) and said external volume (5) are separated by an interface surface (1), where said first refractive index is higher than said second refractive index, where said light source (4) emits a light beam, where said light source (4) has a maximum emission direction defining an axis Z, where the center of said light source (4) is at the origin of said axis Z, where said internal volume (6) is defined by said interface surface (1), a lower surface (2) separating said internal volume (6) from said light source (4), and an upper surface (3), where said axis Z goes through said lower surface (2) and said upper surface (3), **characterized in that** it comprises the generation of said interface surface (1), where: [a] said interface surface (1) is a surface other than a surface defined by a single equation, and/or [b] said lens is a lens without symmetry of revolution, and/or [c] the curve obtained from the intersection of said interface surface (1) with a plane containing said maximum emission direction has at least one inflection point.

10. The method according to claim 9, **characterized in that** the generation of said interface surface (1) comprises a step of optimizing a merit function comprising at least one optical characteristic of said lens.

11. The method according to claim 10, **characterized in that** said merit function compares a distribution of illumination obtained on a pre-established frame of reference with a target distribution of illumination on said frame of reference.

12. The method according to claim 11, **characterized in that** said merit function maximizes the energy received in said frame of reference.

13. The method according to any one of claims 11 or 12, **characterized in that** said merit function minimizes the root-mean-square deviation of said distribution of illumination obtained in said frame of reference with respect to said target distribution of illumination in said frame of reference.

14. The method according to any one of claims 9 to 13, **characterized in that** in the event of said light source (4) being circular, it comprises calculating an inner quadric surface and an outer quadric surface, between which said interface surface (1) must extend, and in the event of said light source (4) not being circular, a plurality of intersections of said light source (4) with a plurality of planes comprising said maximum emission direction are performed, a plurality of cut-off points being determined, and an inner quadric surface and an outer quadric surface between which said interface surface (1) must extend as if said light source (4) was a circular light source (4) are calculated for each meridian of said interface surface (1) passing through each of said cut-off points, such that each meridian of the interface surface (1) must extend between the corresponding meridian of the inner quadric surface and the corresponding meridian of the outer quadric surface, and there are generated an outer NURBS surface from said meridians of the outer quadric surfaces and an inner NURBS surface from said meridians of the inner quadric surfaces.

15. The method according to claim 14, **characterized in that** it comprises calculating Ra, Va, Rb, Rc, Kc, Vc, and Kd by means of the following formulas:

$$R_a = \frac{1}{2}\left( (h + V_a)(1 + k_a) - \frac{\left(\frac{\phi_U}{2}\right)^2}{(h + V_a)} \right)$$

$$V_a = A \cdot k_a$$

$$R_b = \frac{1}{2}\left( (h + V_b)(1 + k_b) - \frac{\left(\frac{\phi_U}{2}\right)^2}{(h + V_b)} \right)$$

$$R_c = -B \cdot \phi_U$$

$$K_c = \frac{R_c}{V_c} + \frac{1}{(2V_c)^2}\left(\frac{\phi_B}{2}\right)^2 - 1$$

$$V_c = \frac{-R_c}{C}$$

$$K_d = \frac{R_d}{V_d} + \frac{1}{(2V_d)^2}\left(\frac{\phi_B}{2}\right)^2 - 1$$

where $k_a$ and $k_b$ have values preferably comprised between -0.5 and -3, $A$ has a value preferably comprised between 1 and 3, $V_b$ has a value preferably comprised between $V_a$ and 2 times $V_a$, $B$ has a value preferably comprised between 1 and 3, $C$ has a value preferably comprised between 0.5 and 4, $R_d$ has a value preferably comprised between 0.5 and 1.5 times $R_c$, and $V_d$ has a value preferably comprised between 1 and 2 times $V_c$.

EP 3 961 089 A1

Fig. 1

Fig. 2

Fig. 3 (a)

Fig. 3 (b)

Fig. 4

Fig. 5

Fig. 6 (a) and (b)

Fig. 7

Fig. 8

Fig. 9 (a) and (b)

Distribution of illumination in detector

Average value of flux at x

Fig. 10 (a), (b) and (c)

Fig. 11 (a), (b) and (c)

Fig. 12 (a), (b) and (c)

Fig. 13 (a), (b) and (c)

Fig. 14

Fig. 15 (a) and (b)

EP 3 961 089 A1

Distribution of illumination in detector

Average value of flux at x

Fig. 16 (a), (b) and (c)

Distribution of illumination in detector

Average value of flux at x

Fig. 17 (a), (b) and (c)

Distribution of illumination in detector

Average value of flux at x

Fig. 18 (a), (b) and (c)

Distribution of illumination in detector

Average value of flux at x

FoV (°)

Fig. 19 (a), (b) and (c)

Distribution of illumination in detector

Average value of flux at x

Fig. 20 (a), (b) and (c)

Distribution of illumination in detector

Average value of flux at x

Fig. 21 (a), (b) and (c)

Distribution of illumination in detector

Average value of flux at x

Fig. 22 (a), (b) and (c)

Distribution of illumination in detector

Average value of flux at x

FoV (°)

Fig. 23 (a), (b) and (c)

Distribution of illumination in detector

Average value of flux at x

Fig. 24 (a), (b) and (c)

Distribution of illumination in detector

Average value of flux at x

Fig. 25 (a), (b) and (c)

Distribution of illumination in detector

Average value of flux at x

FoV (°)

Fig. 26 (a), (b) and (c)

| Europäisches Patentamt / European Patent Office / Office européen des brevets | **EUROPEAN SEARCH REPORT** | Application Number EP 20 38 2766 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/109034 A1 (BIERHUIZEN SERGE [US] ET AL) 6 May 2010 (2010-05-06) | 1-3,5-13 | INV.<br>F21V5/04<br>G02B3/06<br>F21V7/00<br>G02B3/08 |
| Y | * paragraphs [0029] - [0032], [0039], [0041]; figures 3, 10, 12 * | 4,14,15 | |
| Y | US 2019/312017 A1 (JÄGER CLAUS [DE] ET AL) 10 October 2019 (2019-10-10) * paragraphs [0021], [0023], [0065] - [0071], [0076], [0079]; figures 1,2,7,8 * | 1-15 | G02B19/00<br>G02B27/09<br>G02B17/00<br>G02B27/00 |
| Y | US 2004/070855 A1 (BENITEZ PABLO [ES] ET AL) 15 April 2004 (2004-04-15) | 1-13 | |
| A | * paragraphs [0089], [0090], [0128]; figures 7-12, 21 * | 14,15 | |
| Y | US 2014/085919 A1 (TSAI HAN-WEN [TW] ET AL) 27 March 2014 (2014-03-27) | 1-13 | |
| A | * paragraphs [0144], [0168], [0169]; figures 8A-C, 21B, 22B * | 14,15 | |
| A | Annie Shalom Samji Isaac Chandra: "Intelligent Freeform Deformation For LED Illumination Optics" In: "Band 16 ¦ Spektrum der Lichttechnik", 6 February 2018 (2018-02-06), KIT Scientific Publishing, XP055766675, ISBN: 978-3-7315-0741-3 * chapter 3; section "3.1.4 MERIT FUNCTION EVALUATION"; section "5.1 LIMITATIONS IN NURBS"; figure 6.9 * | 1-15 | TECHNICAL FIELDS SEARCHED (IPC)<br>F21V<br>G02B |

-/--

| The present search report has been drawn up for all claims | | |
|---|---|---|
| Place of search Munich | Date of completion of the search 20 January 2021 | Examiner Kaiser, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 20 38 2766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RENÉ KIRRBACH ET AL: "Introducing Advanced Freeform Optic Design to Li-Fi Technology", PROCEEDINGS OF THE 7TH INTERNATIONAL CONFERENCE ON PHOTONICS, OPTICS AND LASER TECHNOLOGY, 27 February 2019 (2019-02-27), pages 248-254, XP055766776, DOI: 10.5220/0007471802480254 ISBN: 978-989-7583-64-3 | 1-3,5-15 | |
| A | * section "3.2.2 Geometrical Calculation"; figure 4 * ----- | 4 | |
| Y | US 2019/162389 A1 (SHAH NITESH [DE]) 30 May 2019 (2019-05-30) | 1-3,5-15 | |
| A | * paragraphs [0136], [0184] - [0186] * ----- | 4 | |

TECHNICAL FIELDS
SEARCHED    (IPC)

The present search report has been drawn up for all claims

| Place of search | Date of completion of the search | Examiner |
|---|---|---|
| Munich | 20 January 2021 | Kaiser, Peter |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
....................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 38 2766

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2021

| Patent document cited in search report | | | Publication date | Patent family member(s) | | Publication date |
|---|---|---|---|---|---|---|
| US 2010109034 | A1 | | 06-05-2010 | BR PI0916184 | A2 | 03-11-2015 |
| | | | | CN 102203964 | A | 28-09-2011 |
| | | | | EP 2347453 | A1 | 27-07-2011 |
| | | | | JP 5676459 | B2 | 25-02-2015 |
| | | | | JP 2012507846 | A | 29-03-2012 |
| | | | | KR 20110084292 | A | 21-07-2011 |
| | | | | RU 2011122644 | A | 20-12-2012 |
| | | | | TW 201033538 | A | 16-09-2010 |
| | | | | US 2010109034 | A1 | 06-05-2010 |
| | | | | WO 2010052619 | A1 | 14-05-2010 |
| US 2019312017 | A1 | | 10-10-2019 | DE 102018107956 | A1 | 10-10-2019 |
| | | | | US 2019312017 | A1 | 10-10-2019 |
| US 2004070855 | A1 | | 15-04-2004 | AU 2003282552 | A1 | 04-05-2004 |
| | | | | CN 1726410 | A | 25-01-2006 |
| | | | | EP 1556715 | A2 | 27-07-2005 |
| | | | | US 2004070855 | A1 | 15-04-2004 |
| | | | | US 2004246606 | A1 | 09-12-2004 |
| | | | | US 2004252390 | A1 | 16-12-2004 |
| | | | | WO 2004034100 | A2 | 22-04-2004 |
| US 2014085919 | A1 | | 27-03-2014 | CN 103672664 | A | 26-03-2014 |
| | | | | EP 2713095 | A2 | 02-04-2014 |
| | | | | JP 5813717 | B2 | 17-11-2015 |
| | | | | JP 2014067715 | A | 17-04-2014 |
| | | | | KR 20140040631 | A | 03-04-2014 |
| | | | | US 2014085919 | A1 | 27-03-2014 |
| US 2019162389 | A1 | | 30-05-2019 | CN 210720860 | U | 09-06-2020 |
| | | | | DE 102016109159 | A1 | 23-11-2017 |
| | | | | EP 3458895 | A1 | 27-03-2019 |
| | | | | US 2019162389 | A1 | 30-05-2019 |
| | | | | WO 2017198781 | A1 | 23-11-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2372081 A1, Arasa
- US 2008285275 A, W. Lubertus
- US 20120320602 A, S. Riesebosch